# EUROPEAN PATENT SPECIFICATION

(11) **EP 0 646 037 B1**
(45) Date of publication and mention of the grant of the patent: **15.01.1997**
(21) Application number: 93911352.8
(22) Date of filing: 18.05.1993
(51) Int. Cl.: B01D 3/14, C10G 21/28

(54) **RECOVERING A RELATIVELY VOLATILE COMPONENT OF A SOLUTION FROM A LESS VOLATILE COMPONENT, E.G. AS IN SOLVENT RECOVERY**
RÜCKGEWINNUNG EINES RELATIV FLÜCHTIGEN BESTANDTEILS EINES LÖSUNGSMITTELS VON EINEM WENIGER FLÜCHTIGEN BESTANDTEIL, Z.B. BEI DER RÜCKGEWINNUNG VON LÖSUNGSMITTELN
RECUPERATION D'UN CONSTITUANT RELATIVEMENT VOLATIL D'UNE SOLUTION CONTENANT AUSSI UN CONSTITUANT MOINS VOLATIL, TELLE QU'UNE RECUPERATION DE SOLVANT

(30) Priority: 19.05.1992 GB 9210620
(43) Date of publication of application: 05.04.1995
(73) Proprietor: EXXON RESEARCH AND ENGINEERING COMPANY, Florham Park, New Jersey 07932-0390 (US)
(72) Inventor: DAVIS, Michael, B., Basking Ridge, NJ 07920 (US); DUGAN, John, J., Sarnia, Ontario N7V 2Z8 (CA); EAGAN, James, D. "Treetops", Woking Surrey GU22 0HW (GB); WELMERS, Adrianus, Baton Rouge, LA 70810 (US)
(74) Representative: Somers, Harold Arnold
(86) International application number: US9304724
(87) International publication number: WO9323131

(56) References cited:
- EP-A- 0 080 808
- DE-B- 1 091 681
- FR-A- 1 305 938
- GB-A- 666 499
- US-A- 3 976 179

## Description

This invention, in its broadest sense, relates to apparatus and a method for recovering a relatively volatile component of a solution from a less volatile component of the solution. However, it finds particular application to recovering solvent from the extract solution from a solvent extraction process.

Solvent extraction processes are very well known, for example in the oil industry. Examples of solvent extraction methods are lubricating oil extraction, de-asphalting and lubricating oil de-waxing processes. Usually, economics dictate that the solvent used in the solvent extraction process be recovered and recycled for re-use in the extraction process.

Numerous techniques are known for recovering the solvent from the extract solution. Typically, the extract solution is passed through a separator, for example a recovery tower, in which the solvent is recovered from the extract product. However, due to inevitable separation inefficiency and carryover within the separator, the recoverd solvent contains residual amounts of the extract product. Usually, because of the presence of these residual amounts of the extract product in the recovered solvent, this solvent cannot merely be recyled to the solvent extraction plant: rather, measures have to be taken to remove as much of the residual extract product as possible beforehand. Furthermore, trace quantities remaining after as much residual extract product as possible has been removed effectively reduces the capacity of the solvent extraction plant.

Examples of solvent recovery processes of background interest to the present invention are disclosed in U.S. Patents 4,482,453 (Coombs et al), 4,664,783 (Preusser et al) and 4,997, 547 (Emmrich et al).

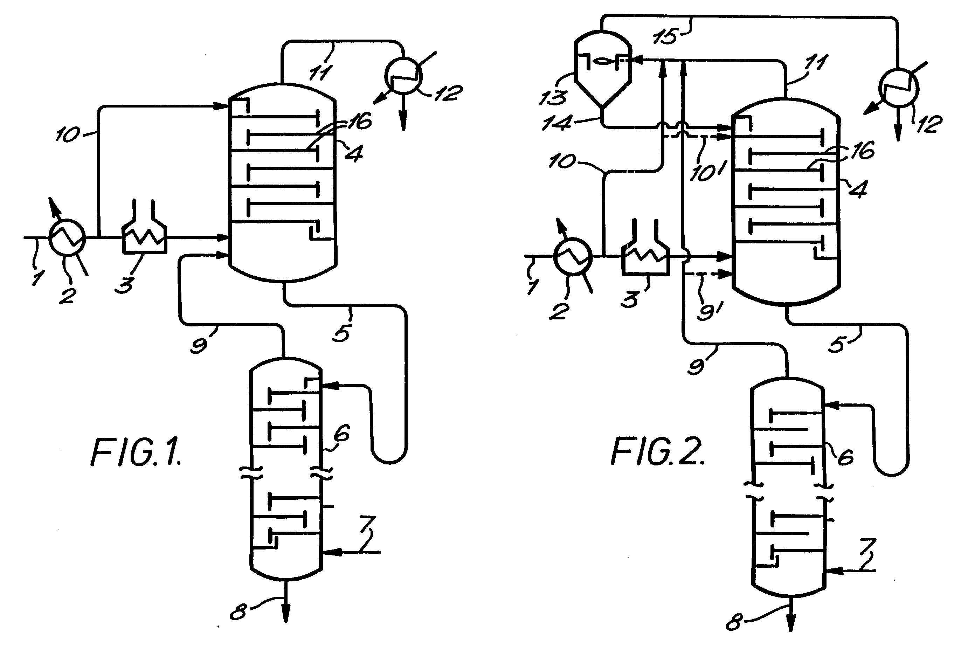

In a typical lubricating oil extraction process, a distillation feed, comprising a fraction boiling in the lubricating oil range from a vacuum distillation tower, and solvent are separately fed to a solvent extraction tower, from which raffinate, i.e. lubricating oil and wax, is produced as overhead and extract solution (i.e. a solution of aromatics in solvent) is produced as bottoms. One form of plant known to the Applicants for recovering the solvent from the extract solution from a lubricating oil extraction plant will be described in more detail hereinbelow with reference to Figure 1. Essentially, however, this plant comprises a recovery tower to which the solvent extract is fed, via a pre-heater, so that most of the solvent is vaporised as it enters the tower, the remainder vaporising within the tower. The tower is a conventional distillation tower provided with trays which are often refluxed with solvent or part of the solvent/solute mixture. The ascending vapour is contacted with descending cooler liquid, for example branched off from the solvent extract feed before it is pre-heated, together with any reflux liquid. In order to improve the solvent recovery, residual quantities of solvent in the liquid bottoms product from the recovery tower can be removed in a stripper and, together with strip gas, introduced into the recovery tower. Solvent vapour produced overhead from the recovery tower is passed, along an overhead line, to a condenser, in which the solvent vapour is condensed to form liquid solvent which can then be reycled for re-use in the lubricating oil extraction plant. A small amount of solvent vapour may condense to form liquid solvent in the overhead line.

There are three main problems with existing solvent recovery facilities such as exemplified above in a lubricating oil extraction plant. Firstly, the solvent/feed ratios needed for such processes are typically large and this in turn often results in flooding limitations in the recovery tower. Thus, the plant capacity cannot be increased unless the tower is replaced with a larger one. Such tower replacements are undesirable because of their high cost. Secondly, high vapour velocities or flooding can result in oil entrainment from the recovery tower and oil contamination of the solvent recovered overhead. Thus, the treat ratio of solvent-to-feed must be increased to obtain the desired solvent product quality. Energy costs to recover the additional solvent are correspondingly higher. The oily solvent also can produce a poorer quality and lower yield of the desired solvent product. Lastly, low efficiency of the recovery tower trays results in high temperatures of the solvent vapours (superheated solvent vapour) leaving the top of the tower. These high temperatures can cause large amounts of oil to be distilled overhead, thus worsening the contamination of the solvent product. Additionally, high vapour temperatures also aggravate any solvent condensing capacity limitations on the condenser used to condense the overhead solvent vapour product from the recovery tower. In general, the closer together the boiling points are of the components of the recovery tower feed, the greater the carryover of extract product into the overhead product.

The contamination of the solvent product resulting from the effects mentioned above is very undesirable. For example, if the oil content of the recycled solvent is 3% by volume, typically this would contribute around 15% to the loading on the plant capacity of the solvent extraction plant. The contaminating oil, typically occupying 3% by volume of the recycled solvent, causes the overhead vapour to appear as a foamy material.

According to the invention from one aspect, there is provided an apparatus for recovering a relatively volatile component of a solution from one (or more) less volatile component(s) of the solution, comprising a recovery tower for recovering the majority of the less volatile component as a liquid bottoms product and for recovering the more volatile component in an overhead product comprising gaseous phase of the more volatile component and a residual amount of liquid phase of the less volatile component;
which apparatus is characterized by the combination of:
an isothermal separator for separating the residual amount of liquid phase (and any other liquid present) from the overhead product, and means for returning the separated liquid from the separator as liquid reflux to the recovery tower;
a feed line, including a heater, for preheating said solution and for feeding it, mainly as a vapour, to the recovery tower; and
a branch line connected between an upstream location, relative to the heater, in said recovery tower feed line and a, or the said, overhead line from the recovery tower to the isothermal separator, for feeding a branched-off proportion of the solution in the feed line of the recovery tower to said overhead line, for reducing the temperature of the overhead product to the dew point of the more volatile component.

According to the invention from another aspect, there is provided a method of recovering a relatively volatile component of a solution from one (or more) less volatile component(s) of the solution, comprising the steps of :-
feeding the solution to a recovery tower in which the solution ascends mainly in vaporised form;
contacting the hot ascending vapour with cooler descending liquid under conditions in the recovery tower such that the majority of the less volatile component is recovered as a liquid bottoms product and the more volatile component is recovered overhead in an overhead product comprising gaseous phase of the more volatile component and a residual amount of liquid phase of the less volatile component;
   which process is characterized by the steps of:
   (a) preheating a portion of the solution before it is introduced into the recovery tower;
   (b) conducting another portion of the solution, before the solution is preheated, to a mixing location with the overhead product containing the residual amount of liquid phase of the less volatile component, the temperature of the said other portion of solution being below that of the overhead product from the recovery tower, so that the temperature of the overhead product after the liquid therein has been removed therefrom is at or only slightly above the dew point of the more volatile component.
   (c) separating the residual amount of liquid phase of the less volatile component (and any other liquid present) from the gaseous phase of the more volatile component in an isothermal separation process, so that substantially no liquid remains in the overhead product; and
   (d) returning said separated liquid to the recovery tower as reflux.

Thus, the isothermal separator, separates the less volatile component, i.e. the oil in the case of processing the extract solution from a lubricating oil extraction process, from the more volatile solvent, which can then be condensed and recycled to the solvent extraction plant. Furthermore, the separated oil, together with the small quantity of liquid solvent separated from the vaporised solvent, is used as reflux to the recovery tower, so that the oil can be separated-out in the bottoms product and the liquid solvent re-vaporised in the recovery tower and recovered as overhead vapour product.

In this way, the foamy overhead product is separated into its respective liquid and vapour phases by the isothermal separator. A cyclone is a particularly simple and effective piece of equipment for this purpose.

In a preferred embodiment, a portion of the extract solution feed to the recovery tower is branched off before the feed is pre-heated prior to introduction into the recovery tower and the branched off portion is mixed with the recovery tower overhead product passing to the isothermal separator. The temperature (e.g. 150°C) of the branched off portion is below that (e.g. 290°C) of the overhead product, so as to reduce the temperature of the overhead product to, or just above, the dew point of the solvent, to desuperheat the overhead product and thereby substantially eliminate the overhead distillation of oil and condenser overloading. In addition, tray flooding is reduced or eliminated, partly because the recovery tower can be operated at a higher temperature and partly because the branched off portion of the recovery tower feed bypasses the tower.

Residual quantities of solvent in the bottoms product can be recovered in the conventional manner using a stripping tower. Preferably, the overhead recovered solvent and strip gas from the stripping tower, instead of being introduced into the recovery tower in its lower region as would be conventional when using a stripping tower, is mixed with the overhead product passing from the recovery tower to the isothermal separator. This contributes to alleviating the loading on the upper trays in the recovery tower. Again, the operating conditions within the solvent recovery plant would be set such that the temperature of the overhead product passing to the isothermal separator is at, or just above, the dew point of the solvent vapour.

For a better understanding of the invention and to show how the same may be carried into effect, reference will now be made, by way of example, to the accompanying drawings, in which:-
Figure 1 is a schematic view of one form of solvent recovery plant, which is known to the Applicants for recovering solvent from a lubricating oil extraction process and which does not constitute an embodiment of the invention; and
Figure 2 is a schematic view of a preferred embodiment of the invention for recovering the solvent used in a lubricating oil extraction process, also indicating some possible modifications.

Although the description which now follows relates to the recovery of solvent from the extract solution from a lubricating oil extraction process, the invention is also applicable to recovering the solvent used in other types of solvent extraction processes (e.g. solvent de-waxing of lubricating oil and de-asphalting), and even, in its broadest sense, to recovering a more volatile component of a solution from a less volatile component of that solution.

Referring to Figure 1, in the solvent recovery plant known to the Applicants, extract solution in recovery tower feedline 1 (this solution comprising typically 75 to 80 volume % extraction solvent, for example N-methyl-pyrrolidone, the balance being aromatic extract material from the treater tower of the extraction plant (both not shown)) is preheated in heat exchanger 2 and furnace 3. Most of the solvent in the extract solution is vaporised as it leaves furnace 3, the mixture passing into recovery (rectification) tower 4, which includes conventional rectification trays 16 for providing vapour-liquid contact between the ascending vapours in the rectification tower 4 and the descending, cooler, liquid. The liquid portion of the mixture fed into the recovery tower through feedline 1, together with descending liquid from the upper region of the tower collecting at the tower bottom, exits the tower 4 through line 5 as liquid bottoms product.

Because of the inevitable imperfect separation between solvent and aromatics in recovery tower 4, the liquid bottoms product contains residual amounts of solvent. In order to recover substantially all of this remaining solvent, the bottoms product is passed to the top of stripping tower 6 which is equipped with stripping trays and to the bottom of which stripping gas, for example nitrogen or any suitable low-boiling temperature gas, is supplied through line 7 to vaporise the residual solvent. The stripped extract product leaves stripping tower 6 through line 8. The solvent vaporised in tower 6, together with the stripping gas supplied through line 7, leaves the top of stripping tower 6 through overhead line 9 and enter rectification tower 4 close to the entry point for the feed mixture from furnace 3. The vapours mix within the tower and pass upwardly. On the trays 16 within the rectification tower 4, the ascending vapours are contacted by cooler descending liquid extract solution introduced into the upper part of the tower 4, above the top tray, through line 10 branched off from a location in feedline 1 upstream of the furnace 3. Vapour leaving the top of tower 4 through line 11 is condensed in condenser 12, to form liquid product which is recycled to the solvent extraction plant (not shown). The strip gas passing through overhead line 11 into condenser 12 can be recycled to feed line 7. As already described, liquid leaving the bottom-most tray of tower 4 combines, in the bottom of the recovery tower, with the liquid portion of the mixture entering tower 4 from feedline 1.

Contacting efficiencies between the liquid and vapour phases on the trays of tower 4 are typically low. Consequently, vapours leave the top of tower 4 through line 11 at a temperature higher than the solvent dew point, i.e. the vapours are superheated. This can result in a constraint in the capacity of the solvent recovery plant if the capacity of condenser 12 is inadequate, because of the liquid phase (contaminant) present in the overhead product. In addition, because the vapour is superheated, the overhead vapour leaving through line 11 will contain an unwanted proportion of distilled extract material which serves to contaminate the recovered solvent with extract and reduce the solvent's capacity to dissolve extract material when used in the treater tower of the solvent extraction plant. Furthermore, owing to low tray efficiencies of recovery tower 4, the liquid leaving the bottom-most tray of tower 4 contains a higher proportion of solvent than is desirable, and can result in overloading of the top-most trays of stripping tower 6. Finally, flooding of the top-most trays of tower 4 can occur if the delivery rate for the branched off extract solution introduced into the upper part of recovery tower 4 is too high, or if its temperature is substantially less than its bubble point temperature. If the branched off extract solution is too cold, a smaller proportion of the solvent in the branched off extract solution introduced into the recovery tower than desirable will be vapourized on the top tray, thus overloading and flooding the tray. As a result, liquid together with aromatic extract material therein may be entrained into overhead line 11. The liquid and aromatic extract in the resulting overhead foam contaminate the recovered solvent and reduce the capacity of the recovered solvent, as explained earlier.

Table 1 below sets out typical pressure and temperature conditions in the solvent recovery plant described above with reference to Figure 1.

The embodiment of the invention shown in Figure 2 is able to overcome these operational difficulties in a simple and effective manner. Many of the components of the solvent extraction plant depicted in Figure 2 operate in essentially the same way as the corresponding components in Figure 1. Such components are designated by the same reference numerals in Figure 2 and will not be described in further detail herein. Table 1 also lists typical prevailing pressure and temperature conditions in the plant of Figure 2. The significance of the temperature differences between the Figures 1 and 2 plants will be explained in the description, below, of the Figure 2 embodiment.

**TABLE 1**

| | Figure 1 | Figure 2 |
|---|---|---|
| Extract solution feed temperature to pre-heater 3: | 150°C | 150°C |
| Extract solution feed temperature to tower 4: | 320°C | 320°C |
| Liquid bottoms product temperature (line 5): | 315°C | 315°C |
| Stripper bottoms product temperature (line 8): | 280°C | 280°C |
| Overhead product temperature from recovery tower: | 275°C | 290°C |
| Cyclone inlet temperature: | - | 265°C |
| Cyclone vapour outlet temperature: | - | 265°C |
| Cyclone liquid outlet temperature: | - | 265°C |
| System pressure: | 3.5 Bar.g | 3.5 Bar.g |
| Strip gas: | N₂ | N₂ |

As shown in Figure 2, the overhead product leaving rectification tower 4 through overhead line 11 is directed to an isothermal vapour-liquid separator, preferably comprising cyclone 13. For a recovery tower typically 12 feet (3.66 m) high, the cyclone would need to be about 2 to 3 feet (61.0 cm to 91.4 cm) in diameter. When the overhead product is a foamy stream owing to the presence of entrained liquid and aromatic extract material, the cyclone functions to collapse the foam, so as to separate the liquid phase of the overhead product from its vapour phase. Alternatively, other forms of isothermal separator than a cyclone can be used, such as a gravity settler using a large diameter vessel, an electrostatic precipitator, or a drum with suitably-placed demister pads or a crinkled wire mesh screen. The vapour phase passes along line 15 to condenser 12, in which the vapour condenses to (uncontamin- ated) liquid solvent, which can then be recycled to the solvent extraction plant. The separated liquid phase is returned to the recovery tower, along line 14, as liquid reflux. In the rectification tower, the small quantity of solvent in the liquid reflux can be recovered as overhead solvent vapour, and the remaining liquid phase can be separated out and included in the bottom product from the rectification tower.

Although the branched off liquid extract solution in branch line 10 can be introduced directly into the recovery tower 4 (as indicated by reference numeral 10') above the uppermost tray, to serve as the descending cooling flow in the tower, preferably, as indicated in Figure 2, line 10 connects with the overhead line 11 leading from the recovery tower 4 to the cyclone 13. Because the temperature (e.g. 150°C) of the extract solution in line 10 is below that (290°C) of the overhead product coming from the recovery tower and because also the flow rate in overhead line 11 is sufficiently large (e.g. typically between 50 and 300 m/s) that the flow is turbulent (with Reynolds numbers typically between 10⁷ and 10⁸) so that thorough mixing of the branched off extract solution and the overhead product from the recovery tower is promoted in line 11, the temperature of the overhead product is reduced. This arrangement provides a very simple and effective means of alleviating the tendency towards flooding on the trays of tower 4, and thereby of increasing its capacity. This is because the intimate mixing of the streams fed to cyclone 13 ensures that the temperature of the vapour leaving the cyclone through line 15 (265°C) is essentially equal to the dew point of the solvent. As such, any capacity limit of condenser 12 is alleviated, and the proportion of extract distilled into overhead line 11 and contaminating the recovered solvent is minimized or eliminated, because of operating at or close to the dew point of the solvent. The intimate mixing of the streams fed to cyclone 13 also ensures that the liquid leaving the cyclone through line 14 is essentially at its bubble point tempera- ture. The use of this liquid as reflux to rectification tower 4, coupled with the bypassing of the recovery tower by the branched off extract solution in branch line 10, serves to alleviate the flooding constraints on the top trays of rectification tower 4 and of stripper tower 6, and to reduce the undesirable entrainment of liquid into overhead line 11.

As in the Figure 1 embodiment, the vapourised solvent and strip gas passing together through the overhead line 9 from the stripper tower 6 can be introduced (through feedline 9') into the recovery tower adjacent the entry location of extract solution feedline 1. The operational benefits mentioned above, apart from the aforementioned adverse effect on the capacity limitation on tower 4, can be still be realized. However, preferably, as shown in Figure 2, line 9 leads directly to and connects with overhead line 11. Then, the capacity limitation of the recovery tower and any tendency to tray flooding can be overcome too. Although, as indicated in Table 1, the temperature (315°C) of the solvent vapour and strip gas in overhead line 9 exceeds that (290°C) of the overhead product from the recovery tower 4, the mixture inlet temperature (265°C) to the cyclone, and hence the cyclone vapour outlet temperature, can still be maintained at or close to the solvent dew point, because of the cooling effect of the extract solvent stream (temperature 150°C) introduced into overhead line 11.

Also, fresh solvent may be used in place of or to supplement the extract solution added to cyclone 13 through branch line 10. The best choice of this liquid reflux will depend on economic considerations, but either source will provide satisfactory operation.

## Claims

1. Apparatus for recovering a relatively volatile component of a solution from one (or more) less volatile component(s) of the solution, comprising a recovery tower (4) for recovering the majority of the less volatile component as a liquid bottoms product and for recovering the more volatile component in an overhead product comprising gaseous phase of the more volatile component and a residual amount of liquid phase of the less volatile component;
which apparatus is characterized by the combination of:
an isothermal separator (13) for separating the residual amount of liquid phase (and any other liquid present) from the overhead product;
means (14) for returning the separated liquid from the separator as liquid reflux to the recovery tower (4); and
a feed line (1), including a heater (3), for preheating said solution and for feeding it, mainly as a vapour, to the recovery tower (4);
a branch line (10) connected between an upstream location, relative to the heater (3), in said recovery tower feedline (1) and a, or the said, overhead line (11) from the recovery tower (4) to the isothermal separator (13), for feeding a branched-off proportion of the solution in the feed line (1) of the recovery tower (4) to said overhead line (11), for reducing the temperature of the overhead product to the dew point of the more volatile component.

2. Apparatus as claimed in claim 1, wherein said isothermal separator (13) comprises a cyclone.

3. Apparatus as claimed in claim 1 or claim 2, further comprising a stripping tower (6) having a feed line (5) for feeding the liquid bottoms product from the recovery tower (4) to the stripping tower (6), a gas stripping line (7) for supplying strip gas to the stripping tower (6) to strip residual amounts of the more volatile component from the liquid bottoms product, and an overhead line (9) for feeding said residual amounts of the more volatile component in vapour form, together with strip gas, to an overhead line (11) from the recovery tower to the isothermal separator, so that the overhead product from the recovery tower, together with residual amounts of the more volatile component and strip gas from the stripping tower (6), are fed as a mixture in said overhead line (11) to the isothermal separator (13).

4. A method for recovering a relatively volatile component of a solution from one (or more) less volatile component(s) of the solution, comprising the steps of:-
feeding the solution to a recovery tower in which the solution ascends mainly in vaporised form;
contacting the hot ascending vapour with cooler descending liquid under conditions in the recovery tower such that the majority of the less volatile component is recovered as a liquid bottoms product and the more volatile component is recovered overhead in an overhead product comprising gaseous phase of the more volatile component and a residual amount of liquid phase of the less volatile component;
which process is characterized by the steps of:
(a) preheating a portion of the solution before it is introduced into the recovery tower;
(b) conducting another portion of the solution, before the solution is preheated, to a mixing location with the overhead product containing the residual amount of liquid phase of the less volatile component, the temperature of the said other portion of solution being below that of the overhead product from the recovery tower, so that the temperature of the overhead product after the liquid therein has been removed therefrom is at or only slightly above the dew point of the more volatile component;
(c) separating the residual amount of liquid phase of the less volatile component (and any other liquid present) from the gaseous phase of the more volatile component in an isothermal separation process, so that substantially no liquid phase remains in the overhead product; and
(d) returning said separated liquid to the recovery tower as reflux.

5. A method as claimed in claim 4, wherein residual quantities of the more volatile component in the liquid bottoms product are removed by contact with ascending strip gas in a stripping tower and the removed residual quantities of the more volatile component, together with strip gas, are mixed with the overhead product containing the residual amount of liquid phase of the less volatile component, the temperature of the overhead product after the liquid therein has been separated therefrom being at or only slightly above the dew point of the more volatile component.

6. A method as claimed in claim 4 or claim 5, wherein the solution comprises the extract solution from a solvent extraction process.

## Patentansprüche

1. Apparatur zur Abtrennung einer relativ flüchtigen Komponente einer Lösung von einer (oder mehreren) weniger flüchtigen Komponente(n) der Lösung, die einen Trennturm (4) zur Abtrennung des größeren Anteils der weniger flüchtigen Komponente als flüssiges Bodenprodukt und zur Abtrennung der flüchtigeren Komponente in einem Kopfprodukt umfaßt, das die gasförmige Phase der flüchtigeren Komponente und eine Restmenge an flüssiger Phase der weniger flüchtigen Komponente umfaßt, wobei die Apparatur gekennzeichnet ist durch die Kombination aus
einem isothermen Abscheider (13) zum Abtrennen der Restmenge an flüssiger Phase (oder beliebiger anderer vorhandener Flüssigkeit) aus dem Kopfprodukt,
Mitteln (14) zum Zurückführen der abgetrennten Flüssigkeit aus dem Abscheider als Flüssigkeitsrückfluß zu dem Trennturm (4), und
einer Speiseleitung (1), die einen Heizer (3) zum Vorheizen der Lösung und zum Einspeisen der Lösung, hauptsächlich als Dampf, in den Trennturm (4) einschließt,
einer Zweigleitung (10), die eine relativ zu dem Heizer (3) in der Speiseleitung (1) des Trennturms stromaufwärts befindliche Stelle mit einer oder der Kopfproduktleitung (11) von dem Trennturm (4) zu dem isothermen Abscheider (13) verbindet, um einen abgezweigten Teil der Lösung in der Speiseleitung (1) des Trennturms in die Kopfproduktleitung (11) einzuspeisen, um die Temperatur des Kopfprodukts auf den Taupunkt der flüchtigeren Komponente zu erniedrigen.

2. Apparatur nach Anspruch 1, bei der der isotherme Abscheider (13) einen Zyklon umfaßt.

3. Apparatur nach Anspruch 1 oder Anspruch 2, die außerdem einen Strippturm (6) mit einer Speiseleitung (5) zum Einspeisen des flüssigen Bodenprodukts aus dem Trennturm (4) in den Strippturm (6), eine Gasstrippleitung (7) zum Zuführen von Strippgas zu dem Strippturm (6), um Restmengen der flüchtigeren Komponente aus dem flüssigen Bodenprodukt zu strippen, und einer Kopfproduktleitung (9) umfaßt, um die Restmengen der flüchtigeren Komponente in Dampfform zusammen mit dem Strippgas einer Kopfproduktleitung (11) von dem Trennturm zu dem isothermen Abscheider einzuspeisen, so daß das Kopfprodukt aus dem Trennturm zusammen mit Restmengen der flüchtigeren Komponente und Strippgas aus dem Strippturm (6) als Mischung in der Kopfproduktleitung (11) in den isothermen Abscheider (13) eingespeist werden.

4. Verfahren zum Abtrennen einer relativ flüchtigen Komponente einer Lösung von einer (oder mehreren) weniger flüchtigen Komponente(n) der Lösung, bei dem in Stufen
die Lösung in einen Trennturm eingespeist wird, in dem die Lösung hauptsächlich in verdampfter Form aufsteigt,
der heiße aufsteigende Dampf mit kälterer absteigender Flüssigkeit unter Bedingungen in dem Trennturm kontaktiert wird, so daß der größere Teil der weniger flüchtigen Komponente als flüssiges Bodenprodukt gewonnen wird und die flüchtigere Komponente über Kopf in einem Kopfprodukt gewonnen wird, das gasförmige Phase der flüchtigeren Komponente und eine Restmenge an flüssiger Phase der weniger flüchtigen Komponente umfaßt,
wobei das Verfahren gekennzeichnet ist durch die Stufen, in denen
(a) ein Teil der Lösung vor der Einbringung in den Trennturm vorgeheizt wird,
(b) ein anderer Teil der Lösung, bevor die Lösung vorgeheizt wird, zu einer Mischstelle mit dem Kopfprodukt, das die Restmenge an flüssiger Phase der weniger flüchtigen Komponente enthält, geleitet wird, wobei die Temperatur des anderen Teils der Lösung unter der des Kopfprodukts aus dem Trennturm liegt, so daß die Temperatur des Kopfprodukts, nachdem die Flüssigkeit aus demselben entfernt worden ist, am Taupunkt der flüchtigeren Komponente oder nur geringfügig darüber liegt,
(c) die Restmenge an flüssiger Phase der weniger flüchtigen Komponente (und beliebiger anderer vorhandener Flüssigkeit) aus der gasförmigen Phase der flüchtigeren Komponente in einem isothermen Trennverfahren abgetrennt wird, so daß im wesentlichen keine flüssige Phase in dem Kopfprodukt verbleibt, und
(d) die abgetrennte Flüssigkeit als Rückfluß in den Trennturm gegeben wird.

5. Verfahren nach Anspruch 4, bei dem Restmengen der flüchtigeren Komponente in dem flüssigen Bodenprodukt durch Kontakt mit aufsteigendem Strippgas in einem Strippturm entfernt werden und die entfernten Restmengen der flüchtigeren Komponente zusammen mit Strippgas mit dem Kopfprodukt gemischt werden, das die Restmengen an flüssiger Phase der weniger flüchtigen Komponente enthält, wobei die Temperatur des Kopfprodukts, nachdem die Flüssigkeit aus demselben abgetrennt worden ist, am Taupunkt der flüchtigeren Komponente oder nur geringfügig darüber liegt.

6. Verfahren nach Anspruch 4 oder Anspruch 5, bei dem die Lösung die Extraktlösung aus einem Lösungsmittelextraktionsverfahren umfaßt.

## Revendications

1. Appareil permettant de récupérer un composant relativement volatil d'une solution d'un (ou plusieurs) composant(s) moins volatil(s) de la solution, comprenant une tour de récupération (4) pour récupérer la majeure partie du composant le moins volatil sous la forme d'un produit liquide de bas de colonne et pour récupérer le composant le plus volatil dans un produit de tête comprenant une phase gazeuse du composant le plus volatil et une quantité résiduaire de la phase liquide du composant le moins volatil, ledit appareil état caractérisé par la combinaison :
d'un séparateur isothermique (13) pour séparer la quantité résiduelle de la phase liquide (ou d'une autre phase liquide présente) du produit de tête,
de moyens (14) pour renvoyer le liquide séparé du séparateur à la tour de récupération (4) sous la forme d'un reflux de liquide,
d'une conduite d'alimentation (1), comprenant un dispositif de chauffage (3) pour préchauffer ladite solution et pour l'acheminer, principalement sous forme de vapeur, à la tour de récupération (4), et
d'une conduite d'embranchement (10) connectée entre un emplacement amont, par rapport au dispositif de chauffage (3), dans ladite conduite d'alimentation (1) de la tour de récupération et une conduite de tête (11), ou ladite conduite de tête (11), entre la tour de récupération (4) et le séparateur isothermique (13), pour acheminer une partie dérivée de la solution dans la conduite d'alimentation (1) de la tour de récupération (4) à ladite conduite de tête (11), pour réduire la température du produit de tête au point de rosée du composant le plus volatil.

2. Appareil selon la revendication 1, dans lequel ledit séparateur isothermique (13) comprend un cyclone.

3. Appareil selon la revendication 1 ou 2, comprenant par ailleurs une colonne de rectification (6) ayant une conduite d'alimentation (5) pour acheminer le produit liquide de bas de colonne de la tour de récupération (4) à la colonne de rectification (6), une conduite de rectification de gaz (7) pour délivrer un gaz de rectification à la colonne de rectification (6) pour rectifier des quantités résiduelles du composant le plus volatil du produit liquide de bas de colonne, et une conduite de tête (9) pour acheminer lesdites quantités résiduelles du composant le plus volatil sous forme de vapeur, conjointement avec le gaz de rectification, à une conduite de tête (11) entre la tour de récupération et le séparateur isothermique, de telle sorte que le produit de tête provenant de la tour de récupération, conjointement avec des quantités résiduelles du composant le plus volatil et du gaz de rectification provenant de la colonne de rectification (6), soit acheminé sous forme de mélange dans ladite conduite de tête (11) au séparateur isothermique (13).

4. Procédé de récupération d'un composant relativement volatil d'une solution vis-à-vis d'un (ou plusieurs) composant(s) moins volatil(s) de la solution, comprenant les étapes suivantes :
on achemine la solution à une tour de récupération dans laquelle la solution monte principalement sous forme de vapeur,
on met en contact la vapeur ascendante chaude avec un liquide descendant plus froid dans des conditions dans la tour de récupération telles que la majeure partie du composant le moins volatil soit récupérée sous la forme d'un produit liquide de bas de colonne et que le composant le plus volatil soit récupéré en tête dans un produit de tête comprenant une phase gazeuse du composant le plus volatil et une quantité résiduelle de la phase liquide du composant le moins volatil,
ledit procédé étant caractérisé en ce que :
(a) on préchauffe une partie de la solution avant qu'elle ne soit introduite dans la tour de récupération,
(b) on achemine une autre partie de la solution, avant que la solution ne soit préchauffée, à un emplacement de mélange avec le produit de tête contenant la quantité résiduelle de la phase liquide du composant le moins volatil, la température de ladite autre partie de la solution étant inférieure à celle du produit de tête provenant de la tour de récupération, de telle sorte que la température du produit de tête, après que le liquide qui s'y trouve en a été éliminé, soit au point de rosée ou seulement légèrement au-dessus du point de rosée du composant le plus volatil,
(c) on sépare la quantité résiduelle de la phase liquide du composant le moins volatil (ou de n'importe quel autre liquide présent) de la phase gazeuse du composant le plus volatil dans un procédé de séparation isothermique, de telle sorte que sensiblement aucune trace de liquide ne reste dans le produit de tête, et
(d) on renvoie ledit liquide séparé à la tour de récupération sous forme de reflux.

5. Procédé selon la revendication 4, dans lequel les quantités résiduelles du composant le plus volatil dans le produit liquide de bas de colonne sont éliminées par contact avec un gaz de rectification ascendant dans une colonne de rectification et les quantités résiduelles éliminées du composant le plus volatil, conjointement avec du gaz de rectification, sont mélangées au produit de tête contenant la quantité résiduelle de la phase liquide du composant le moins volatil, la température du produit de tête, après que le liquide qui s'y trouve en a été séparé, étant au moins au point de rosée ou légèrement au-dessus du point de rosée du composant le plus volatil.

6. Procédé selon la revendication 4 ou 5, dans lequel la solution comprend la solution d'extrait provenant d'un procédé d'extraction par solvant.
